# EUROPEAN PATENT APPLICATION

(11) **EP 3 311 964 A1**
(43) Date of publication of application: **25.04.2018**
(21) Application number: 16811573.1
(22) Date of filing: 12.06.2016
(51) Int. Cl.: B25J 19/06

(54) **ROBOT APPARATUS AND MOTOR CONTROL DEVICE**

(30) Priority: 19.06.2015 JP 2015124219
(71) Applicant: Life Robotics Inc., Koto-ku Tokyo 135-0047 (JP)
(72) Inventor: YOON, Woo-Keun, Tokyo 135-0047 (JP)
(74) Representative: Herrero & Asociados, S.L.
(86) International application number: PCT/JP2016/067461
(87) International publication number: WO 2016/204099

(57) **Abstract**

This invention comprehensively detects an operational abnormality caused by a disturbance factor such as contact of a robot arm. A robot device according to the present embodiment is equipped with an articulated arm mechanism, and includes: a plurality of links; a plurality of joints (J1 to J6) interconnecting the plurality of links; a plurality of motors (310 to 360) that generate motive power for driving the plurality of joints; a transmission mechanism that transmits rotation of a drive shaft of a motor of at least one joint among the plurality of joints to a rotary shaft of the at least one joint; a first encoder (235) that detects rotation of the drive shaft of the motor of the at least one joint; a second encoder (236) that detects rotation of the rotary shaft of the at least one joint; and a determining section (105) that determines an operational abnormality based on an encoder pulse that is output from the first encoder and an encoder pulse that is output from the second encoder.

## Description

### FIELD

Embodiments described herein relate generally to a robot device and a motor control device.

### BACKGROUND

Recent years have seen an increasing number of environments in which a robot and a worker are present in the same space. In addition to robots for nursing care that naturally carry out work in the same space as a worker, it is considered that from now on there will be an increasing number of situations in which industrial robots perform work side-by-side and in cooperation with workers. What is important in such situations is safety, and a rapid stopping or withdrawal operation at the time of an operational abnormality attributable to a disturbance factor typified by contact of a robot arm against a worker or the like, particularly, a collision, is of extreme importance.

Therefore, in many robot devices it is necessary to arrange contact sensors at a large number of places at the tip or on side faces or the like of an arm.

However, the positions at which contact sensors can be attached are limited, and it is not realistic to attach a contact sensor at all positions at which there is a possibility of contact, and it has not been possible to comprehensively deal with contact.

An object of the present invention is to comprehensively detect operational abnormalities caused by disturbance factors such as contact of a robot arm.

A robot device according to the present embodiment is a robot device that is equipped with an articulated arm mechanism, and includes: a plurality of links; a plurality of joints interconnecting the plurality of links; a plurality of motors that generate motive power for driving the plurality of joints; a transmission mechanism that transmits rotation of a drive shaft of a motor of at least one joint among the plurality of joints to a rotary shaft of the at least one joint; a first encoder that detects rotation of the drive shaft of the motor of the at least one joint; a second encoder that detects rotation of the rotary shaft of the at least one joint; and a determining section that makes a determination with respect to an operational abnormality based on an encoder pulse that is output from the first encoder and an encoder pulse that is output from the second encoder.

### BRIEF DESCRIPTION OF THE VIEWS OF THE DRAWINGS

FIG. 1 is an external perspective view of a robot arm mechanism of a robot device according to the present embodiment;
FIG. 2 is a side view illustrating the internal structure of the robot arm mechanism illustrated in FIG. 1;
FIG. 3 is a view illustrating the configuration of the robot arm mechanism in FIG. 1 by representation with graphic symbols;
FIG. 4 is a perspective view illustrating the structure of a drive mechanism of a linear extension and retraction joint J3 shown in FIG. 1;
FIG. 5 is a block diagram illustrating the configuration of the robot device according to the present embodiment; and
FIG. 6 is a flowchart illustrating procedures of collision determination processing executed by a collision determining section 105 shown in FIG. 5.

### DETAILED DESCRIPTION

Hereinafter, a robot device according to the present embodiment is described with reference to the accompanying drawings. The robot device includes a robot arm mechanism having joints that adopt a stepping motor as an actuator. The robot device is described by taking a vertical articulated arm mechanism, in particular, a vertical articulated arm mechanism including one joint that is a linear extension and retraction joint among the plurality of joints, as an example thereof. In the following description, the same reference numerals denote components that have substantially identical functions and configurations, and a repeated description of such components is made only if necessary.

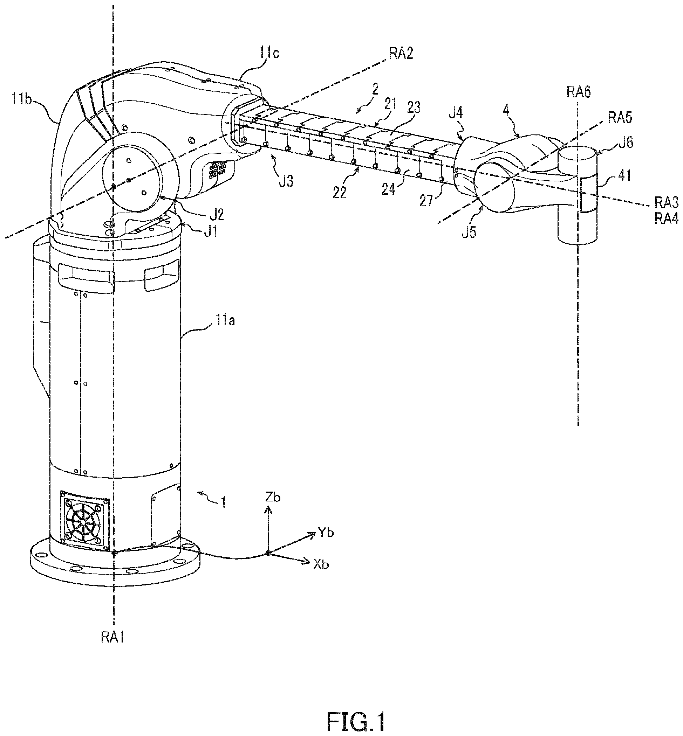

FIG. 1 is an external perspective view of the robot device according to the present embodiment. The robot arm mechanism constituting the robot device includes a substantially cylindrical base 1, an arm section 2 that is connected to the base 1, and a wrist section 4 that is attached to the tip of the arm section 2. An unshown adapter is provided at the wrist section 4. For example, the adapter is provided at a rotating section on a sixth rotation axis RA6 that is described later. A robot hand configured according to the use is attached to the adapter provided at the wrist section 4.

The robot arm mechanism includes a plurality of joints, in this example, six joints, J1, J2, J3, J4, J5 and J6. The plurality of joints J1, J2, J3, J4, J5 and J6 are arranged in the foregoing order from the base 1. Generally, a first, a second and a third joint J1, J2 and J3 are called "root three axes", and a fourth, a fifth and a sixth joint J4, J5 and J6 are called "wrist three axes" that change the posture of the robot hand. The wrist section 4 includes the fourth, fifth and sixth joints J4, J5 and J6. At least one of the joints J1, J2 and J3 constituting the root three axes is a linear extension and retraction joint. Herein, the third joint J3 is configured as a linear extension and retraction joint, in particular, as a joint with a relatively long extension and retraction distance. The arm section 2 represents an extension and retraction portion of the linear extension and retraction joint J3 (third joint J3).

The first joint J1 is a torsion joint that rotates on a first rotation axis RA1 and which is supported, for example, perpendicularly to a base surface. The second joint J2 is a bending joint that rotates on a second rotation axis RA2 that is arranged perpendicular to the first rotation axis RA1. The third joint J3 is a joint at which the arm section 2 linearly extends or retracts along a third axis (movement axis) RA3 that is arranged perpendicular to the second rotation axis RA2.

The fourth joint J4 is a torsion joint that rotates on a fourth rotation axis RA4. The fourth rotation axis RA4 substantially matches the third movement axis RA3 when a seventh joint J7 that is described later is not rotated, that is, when the entire arm section 2 is a rectilinear shape. The fifth joint J5 is a bending joint that rotates on a fifth rotation axis RA5 that is orthogonal to the fourth rotation axis RA4. The sixth joint J6 is a bending joint that rotates on the sixth rotation axis RA6 that is arranged orthogonal to the fourth rotation axis RA4 and perpendicular to the fifth rotation axis RA5.

An arm support body (first support body) 11a forming the base 1 has a cylindrical hollow structure formed around the first rotation axis RA1 of the first joint J1. The first joint J1 is attached to a fixed base (not shown). When the first joint J1 rotates, the arm section 2 turns left and right together with the axial rotation of the first support body 11a. The first support body 11a may be fixed to a supporting surface. In such case, the arm section 2 is provided with a structure that turns independently of the first support body 11a. A second support body 11b is connected to an upper part of the first support body 11a.

The second support body 11b has a hollow structure continuous to the first support body 11a. One end of the second support body 11b is attached to a rotating section of the first joint J1. The other end of the second support body 11b is opened, and a third support body 11c is set rotatably on the rotation axis RA2 of the second joint J2. The third support body 11c has a hollow structure made from a scaly outer covering that communicates with the first support body 11a and the second support body 11b. In accordance with the bending rotation of the second joint J2, a rear part of the third support body 11c is accommodated in or sent out from the second support body 11b. The rear part of the arm section 2 constituting the linear extension and retraction joint J3 (third joint J3) of the robot arm mechanism is housed inside the continuous hollow structure of the first support body 11a and the second support body 11b by retraction thereof.

The third support body 11c is set rotatably, at the lower part of its rear end, on the second rotation axis RA2 with respect to a lower part of an open end of the second support body 11b. In this way, the second joint J2 serving as a bending joint that rotates on the second rotation axis RA2 is formed. When the second joint J2 rotates, the arm section 2 rotates vertically, i.e., rotates upward and downward, on the second rotation axis RA2 of the arm section 2.

The fourth joint J4 is a torsion joint having the fourth rotation axis RA4 which typically abuts an arm center axis along the extension and retraction direction of the arm section 2, that is, the third movement axis RA3 of the third joint J3. When the fourth joint J4 rotates, the wrist section 4 and the robot hand attached to the wrist section 4 rotate on the fourth rotation axis RA4. The fifth joint J5 is a bending joint having the fifth rotation axis RA5 that is orthogonal to the fourth rotation axis RA4 of the fourth joint J4. When the fifth joint J5 rotates, the wrist section 4 pivots up and down from the fifth joint J5 to its tip together with the robot hand (in the vertical direction around the fifth rotation axis RA5). The sixth joint J6 is a bending joint having the sixth rotation axis RA6 that is orthogonal to the fourth rotation axis RA4 of the fourth joint J4 and is perpendicular to the fifth rotation axis RA5 of the fifth joint J5. When the sixth joint J6 rotates, the robot hand turns left and right.

As described above, the robot hand attached to the adapter of the wrist section 4 is moved to a given position by the first, second and third joints J1, J2 and J3, and is disposed in a given posture by the fourth, fifth and sixth joints J4, J5 and J6. In particular, the length of the extension and retraction distance of the arm section 2 of the third joint J3 makes it possible to cause the robot hand to reach objects over a wide range from a position close to the base 10 to a position far from the base 1. The third joint J3 is characterized by linear extension and retraction operations realized by a linear extension and retraction mechanism constituting the third joint J3, and by the length of the extension and retraction distance thereof.

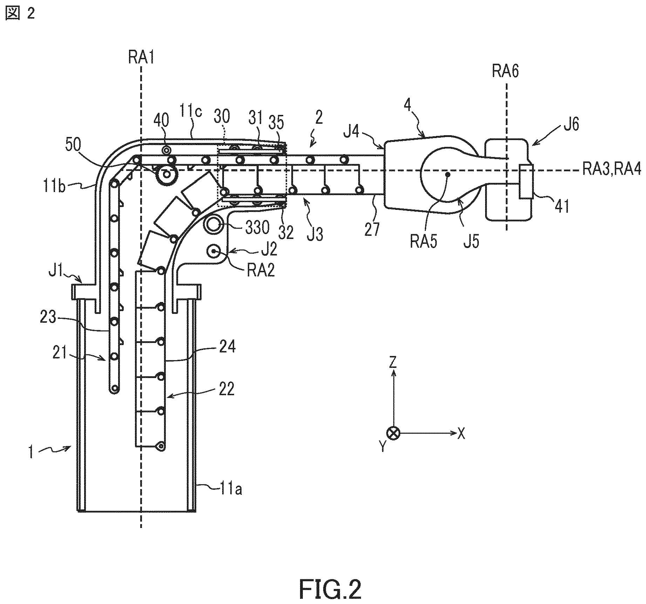

FIG. 2 is a perspective view illustrating the internal structure of the robot arm mechanism in FIG. 1. The linear extension and retraction mechanism includes the arm section 2 and an ejection section 30. The arm section 2 has a first connection piece string 21 and a second connection piece string 22. The first connection piece string 21 includes a plurality of first connection pieces 23. The first connection pieces 23 are formed in a substantially flat plate shape. The first connection pieces 23 which are arranged in front and behind each other are connected to each other in a string shape in a bendable manner by pins at their edge parts. The first connection piece string 21 can bend inward and outward freely.

The second connection piece string 22 includes a plurality of second connection pieces 24. The respective second connection pieces 24 are formed as a short groove-like body having an inverted C-shape in transverse section. The second connection pieces 24 which are arranged in front and behind each other are connected to each other in a string shape in a bendable manner by pins at their bottom edge parts. The second connection piece string 22 can bend inward. Because the cross section of each of the second connection pieces 24 is an inverted C-shape, the second connection piece string 22 does not bend outward since side plates of adjacent second connection pieces 24 collide together. Note that, a face that faces the second rotation axis RA2 of the first and second connection pieces 23 and 24 is referred to as an inner face, and a face on the opposite side to the inner face is referred to as an outer face. The foremost first connection piece 23 in the first connection piece string 21, and the foremost second connection piece 24 in the second connection piece string 22 are connected by a head piece 27. For example, the head piece 27 has a shape that combines the second connection piece 24 and the first connection piece 23.

In the ejection section 30, a plurality of upper rollers 31 and a plurality of lower rollers 32 are supported by a frame 35 having a rectangular cylinder shape. For example, the plurality of upper rollers 31 are arranged along the arm center axis at intervals that are approximately equivalent to the length of the first connection piece 23. Similarly, the plurality of lower rollers 32 are arranged along the arm center axis at intervals that are approximately equivalent to the length of the second connection piece 24. At the rear of the ejection section 30, a guide roller 40 and a drive gear 50 are provided so as to face each other with the first connection piece string 21 sandwiched therebetween. The drive gear 50 is connected to a stepping motor 330 through an unshown decelerator. A linear gear is formed along the connecting direction on the inner face of the first connection piece 23. When a plurality of the first connection pieces 23 are aligned in a rectilinear shape, the linear gears of the first connection pieces 23 connect in a rectilinear shape to thereby form a long linear gear. The drive gear 50 is meshed with the linear gear having the rectilinear shape. The linear gear that is connected in a rectilinear shape constitutes a rack-and-pinion mechanism together with the drive gear 50.

When the arm is extended, a motor 55 drives and the drive gear 50 rotates in the forward direction so that the first connection piece string 21 is placed in a posture in which the first connection piece string 21 is parallel to the arm center axis and is guided to between the upper rollers 31 and the lower rollers 32 by the guide roller 40. Accompanying movement of the first connection piece string 21, the second connection piece string 22 is guided between the upper rollers 31 and the lower rollers 32 of the ejection section 30 by an unshown guide rail arranged at the rear of the ejection section 30. The first and second connection piece strings 21 and 22 that were guided between the upper rollers 31 and the lower rollers 32 are pressed against each other. Thereby, a columnar body is constituted by the first and second connection piece strings 21 and 22. The ejection section 30 joins the first and second connection piece strings 21 and 22 to form the columnar body, and also supports the columnar body in the upward, downward, left and right directions. The columnar body that is formed by joining of the first and second connection piece strings 21 and 22 is firmly maintained by the ejection section 30, and thus the joined state between the first and second connection piece strings 21 and 22 is maintained. When the joined state between the first and second connection piece strings 21 and 22 is maintained, bending of the first and second connection piece strings 21 and 22 is restricted in a reciprocal manner by the first and second connection piece strings 21 and 22. Thus, the first and second connection piece strings 21 and 22 constitute a columnar body that has a certain rigidity. The term "columnar body" refers to a columnar rod body that is formed by the first connection piece string 21 being joined to the second connection piece string 22. In the columnar body, the second connection pieces 24 are, together with the first connection pieces 23, constituted in a tubular body having various cross-sectional shapes overall. The tubular body is defined as a shape in which the top, bottom, left and right sides are enclosed by a top plate, a bottom plate and two side plates, and a front end section and rear end section are open. The columnar body formed by joining of the first and second connection piece strings 21 and 22 is linearly sent out along the third movement axis RA3 starting with the head piece 27 in the outward direction from an opening of the third support body 11c.

When the arm is retracted, the motor 55 drives and the drive gear 50 is rotated backward, whereby the first connection piece string 21 that is engaged with the drive gear 50 is drawn back into the first support body 11a. Accompanying the movement of the first connection piece string, the columnar body is drawn back into the third support body 11c. The columnar body that has been drawn back separates at the rear of the ejection section 30. For example, the first connection piece string 21 constituting one part of the columnar body is sandwiched between the guide roller 40 and the drive gear 50, and the second connection piece string 22 constituting one part of the columnar body is pulled downward by gravitational force, and as a result the second connection piece string 22 and the first connection piece string 21 break away from each other. The first and second connection piece strings 21 and 22 that broke away from each other revert to their respective bendable states. When housing the first and second connection piece strings 21 and 22, the second connection piece string 22 is bent and conveyed to the inner side into a housing section within the first support body 11a (base 1) from the ejection section 30, and the first connection piece string 21 is also bent and conveyed in the same direction (inward) as the second connection piece string 22. The first connection piece string 21 and the second connection piece string 22 are housed in a substantially parallel state.

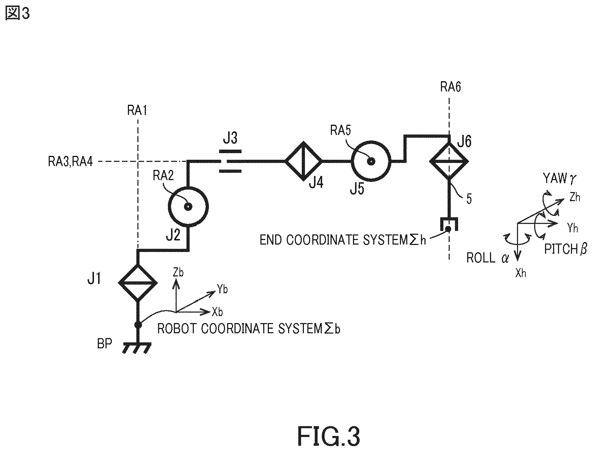

FIG. 3 is a view illustrating the robot arm mechanism in FIG. 1 by representation with graphic symbols. In the robot arm mechanism, three positional degrees of freedom are realized by the first joint J1, the second joint J2 and the third joint J3 constituting the root three axes. Further, three postural degrees of freedom are realized by the fourth joint J4, the fifth joint J5 and the sixth joint J6 constituting the wrist three axes.

A robot coordinate system Σb is a coordinate system that takes a given position on the first rotation axis RA1 of the first joint J1 as the origin. In the robot coordinate system Σb, three orthogonal axes (Xb, Yb, Zb) are defined. The Zb axis is an axis that is parallel to the first rotation axis RA1. The Xb axis and the Yb axis are orthogonal to each other, and are orthogonal to the Zb axis. An end coordinate system Σh is a coordinate system that takes a given position (end reference point) of the robot hand 5 that is attached to the wrist section 4 as the origin. For example, in a case where the robot hand 5 is a two-fingered hand, the position of the end reference point (hereunder, referred to simply as "end") is defined as the center position between the two fingers. In the end coordinate system Σh, three orthogonal axes (Xh, Yh, Zh) are defined. The Zh axis is an axis that is parallel to the sixth rotation axis RA6. The Xh axis and the Yh axis are orthogonal to each other, and are orthogonal to the Zh axis. For example, the Xh axis is an axis that is parallel to the longitudinal direction of the robot hand 5. The end posture is given as a rotation angle (rotation angle around the Xh axis (yaw angle)) α, a rotation angle (pitch angle) β around the Yh axis, and a rotation angle (roll angle) γ around the Zh axis) that rotate around the respective orthogonal three axes with respect to the robot coordinate system Σb of the end coordinate system Σh.

The first joint J1 is arranged between the first support body 11a and the second support body 11b, and is configured as a torsion joint that rotates on the rotation axis RA1. The rotation axis RA1 is arranged perpendicular to a base plane BP of a base mount on which a fixed section of the first joint J1 is disposed.

The second joint J2 is configured as a bending joint that rotates on the rotation axis RA2. The rotation axis RA2 of the second joint J2 is provided parallel to the Xb axis on a spatial coordinate system. The rotation axis RA2 of the second joint J2 is provided in a perpendicular direction relative to the rotation axis RA1 of the first joint J1. In addition, relative to the first joint J1, the second joint J2 is offset in two directions, namely, the direction of the first rotation axis RA1 (Zb-axis direction), and the Yb-axis direction that is perpendicular to the first rotation axis RA1. The second support body 11b is attached to the first support body 11a in a manner so that the second joint J2 is offset in the aforementioned two directions relative to the first joint J1. A virtual arm rod portion (link portion) connecting the first joint J1 to the second joint J2 has a crank shape in which two hook-shaped bodies that each have a tip that is bent at a right angle are combined. The virtual arm rod portion is constituted by the first and second support bodies 11a and 11b which have a hollow structure.

The third joint J3 is configured as a linear extension and retraction joint that rotates on the movement axis RA3. The movement axis RA3 of the third joint J3 is provided in a perpendicular direction relative to the rotation axis RA2 of the second joint J2. When the arm section 2 is in a horizontal alignment pose in which the rotation angle of the second joint J2 is zero degrees, that is, the upward/downward rotation angle of the arm section 2 is zero degrees, the movement axis RA3 of the third joint J3 is also provided in a perpendicular direction to the rotation axis RA1 of the first joint J1 together with the rotation axis RA2 of the second joint J2. On the spatial coordinate system, the movement axis RA3 of the third joint J3 is provided parallel to the Yb axis that is perpendicular to the Xb axis and Zb axis. In addition, relative to the second joint J2, the third joint J3 is offset in two directions, namely, the direction of the rotation axis RA2 thereof (Yb-axis direction), and the direction of the Zb axis that is orthogonal to the movement axis RA3. The third support body 11c is attached to the second support body 11b in a manner so that the third joint J3 is offset in the aforementioned two directions relative to the second joint J2. A virtual arm rod portion (link portion) connecting the second joint J2 to the third joint J3 has a hook-shaped body in which the tip is bent at a right angle. The virtual arm rod portion is constituted by the second and third support bodies 11b and 11c.

The fourth joint J4 is configured as a torsion joint that rotates on the rotation axis RA4. The rotation axis RA4 of the fourth joint J4 is arranged so as to substantially match the movement axis RA3 of the third joint J3.

The fifth joint J5 is configured as a bending joint that rotates on the rotation axis RA5. The rotation axis RA5 of the fifth joint J5 is arranged so as to be substantially orthogonal to the movement axis RA3 of the third joint J3 and the rotation axis RA4 of the fourth joint J4.

The sixth joint J6 is configured as a torsion joint that rotates on the rotation axis RA6. The rotation axis RA6 of the sixth joint J6 is arranged so as to be substantially orthogonal to the rotation axis RA4 of the fourth joint J4 and the rotation axis RA5 of the fifth joint J5. The sixth joint J6 is provided for turning the robot hand 5 as an end effector to the left and right. The sixth joint J6 may be configured as a bending joint in which the rotation axis RA6 thereof is substantially orthogonal to the rotation axis RA4 of the fourth joint J4 and the rotation axis RA5 of the fifth joint J5.

By replacing one bending joint among the root three axes of the plurality of joints J1 to J6 with a linear extension and retraction joint, causing the second joint J2 to be offset in two directions relative to the first joint J1, and causing the third joint J3 to be offset in two directions relative to the second joint J2 in this way, the robot arm mechanism of the robot device according to the present embodiment structurally eliminates a singular point posture.

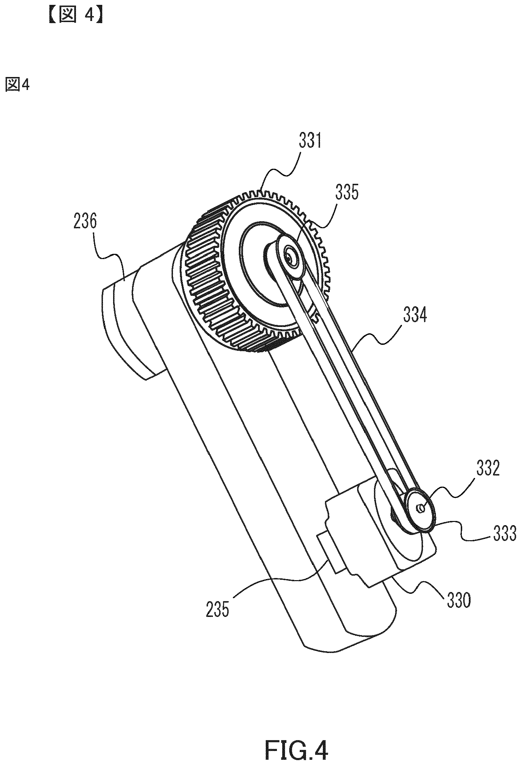

### (Description of Drive Mechanism) FIG. 4

Next the drive mechanisms of the respective joints J1-J6 will be described. Although in this case the drive mechanism of the third joint J3 is described as an example, the drive mechanisms of each of the other joints J1, J2 and J4 to J6 are the same as the drive mechanism of the third joint J3.

FIG. 4 is a perspective view illustrating the structure of the drive mechanism of the third joint J3 shown in FIG. 1. As illustrated in FIG. 4, the drive mechanism of the third joint J3 has the stepping motor 330. A drive shaft encoder 235 is engaged with one end of a drive shaft (driving axle, input shaft) of the stepping motor 330. The drive shaft encoder 235 outputs a pulse (encoder pulse) each time the drive shaft rotates by a predetermined minute angle. A driving pulley is directly coupled with the other end of the drive shaft. A belt is hung between the driving pulley and a driven pulley. A belt having any kind of structure such as a flat belt, a V-belt or a toothed belt may be adopted as the belt, and an arbitrary material such as synthetic rubber or polyurethane may be adopted as the material of the belt. The diameter of the driven pulley is designed so as to realize a predetermined speed reduction ratio α relative to the diameter of the driving pulley. The driving pulley, the driven pulley and the belt constitute a transmission mechanism for transmitting rotation of the stepping motor 330 to a drive gear 331. Note that, the transmission mechanism may have a different configuration, for example, the transmission mechanism may be constituted from a plurality of gears of differing gear ratios. The drive gear 331 is directly coupled to the shaft (output shaft) of the driven pulley. An output shaft encoder 236 is engaged with the shaft (output shaft, driven shaft) of the driven pulley. The output shaft encoder 236 outputs an encoder pulse each time the shaft of the driven pulley rotates, for example, by the aforementioned step angle.

The drive gear 331 constitutes a rack-and-pinion mechanism together with a linear gear that is formed in the arm section 2 of the linear extension and retraction joint J3. The arm section 2 of the third joint J3 is sent out by a distance (extension and retraction distance) that is in accordance with the rotation angle of the drive gear 331. The rotary shaft (drive shaft, driving axle) of the stepping motor 330 is connected through the transmission mechanism to the rotary shaft (drive gear shaft, driven shaft, output shaft) of the drive gear 331. The transmission mechanism typically constitutes a speed reducing mechanism with a speed reduction ratio α for reducing the rotational speed of the stepping motor 330 and increasing the torque of the stepping motor 330. For example, when a speed reducing mechanism with a speed reduction ratio of 2 is used for the drive gear 331, the drive gear 331 rotates at a rotational angular velocity that is one-half of the rotational angular velocity of the stepping motor 330, and generates torque that is twice the size of the torque of the stepping motor 330.

The drive shaft encoder (first encoder) 235 and the output shaft encoder (second encoder) 236 constitute an incremental rotary encoder together with counters 237 and 238, respectively. The incremental rotary encoder may be of any kind, such as an optical rotary encoder or a magnetic rotary encoder. Each time the drive shaft rotates by a certain rotation angle (resolution, step angle), the drive shaft encoder 235 outputs pulse signals of two phases (A-phase signal and B-phase signal), for example, with a phase difference of 90 degrees. The drive shaft encoder 235 also outputs an origin pulse signal (Z-phase signal) each time the drive shaft completes one rotation. An encoder that is typically equipped with the same function and performance as the drive shaft encoder 235 is adopted as the output shaft encoder 236. The output shaft encoder 236 outputs pulse signals (A-phase signal and B-phase signal) of two phases, for example, with a phase difference of 90 degrees, each time the drive gear shaft rotates by the same step angle (resolution) as described above, and also outputs an origin pulse signal (Z-phase signal) each time the drive gear shaft completes one rotation.

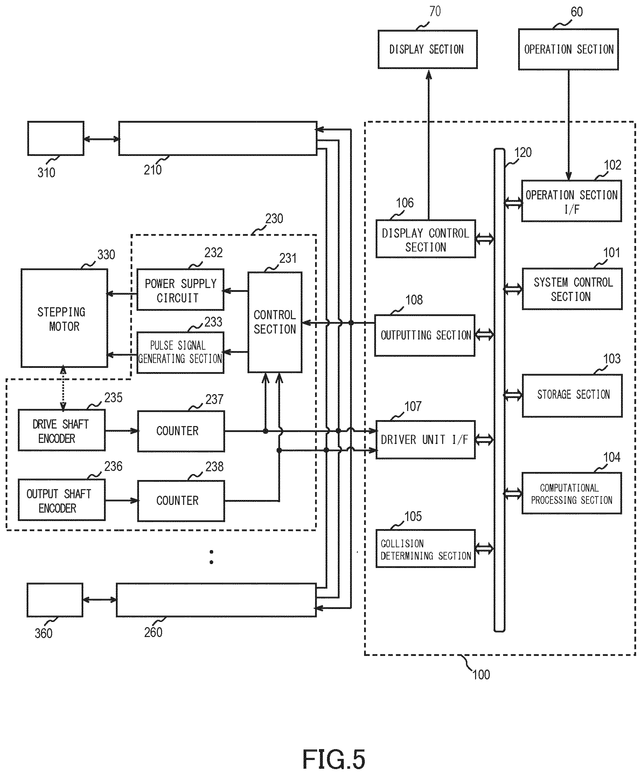

### (Description of Configuration) FIG. 5

FIG. 5 is a block diagram illustrating the configuration of the robot device according to the present embodiment. Stepping motors 310, 320, 330, 340, 350 and 360 are provided as actuators in the joints J1, J2, J3, J4, J5 and J6, respectively, of the robot arm mechanism of the robot device according to the present embodiment. Driver units 210, 220, 230, 240, 250 and 260 are electrically connected to the stepping motors 310, 320, 330, 340, 350 and 360. The driver units 210, 220, 230, 240, 250 and 260 have the same configuration as each other, and drive the stepping motors 310, 320, 330, 340, 350 and 360 that are the control objects in accordance with a control signal (command value) from an external control device 100. Hereunder, the configuration and operations of the driver unit 230 will be described. The configuration and operations of the other driver units 210, 220, 240, 250 and 260 are the same as the configuration and operations of the driver unit 230, and hence a description regarding the other driver units 210, 220, 240, 250 and 260 will be omitted from the following description.

In the stepping motor 330, a plurality of stator coils are disposed around a rotor. The stator coils are connected to a power supply circuit 232 through switching elements. The switching elements are turned on by a pulse signal supplied from a pulse signal generating section 233. As a result of the switching elements being turned on in sequence, the stepping motor 330 (rotor) rotates sequentially at a predetermined step angle. The rotational speed of the stepping motor 330 can be changed by changing the frequency (pulse frequency) of the pulse signal.

The driver unit 230 controls driving and stopping of the stepping motor 330. The driver unit 230 includes a control section 231, the power supply circuit 232, the pulse signal generating section 233, the drive shaft encoder 235, the output shaft encoder 236, the counter 237 and the counter 238. The control section 231 performs centralized control of the driver unit 230 in accordance with a command value that is input from the control device 100.

A command value (current command code) representing an excitation current value of the stepping motor 330 is supplied from the control device 100 to the control section 231. At the control section 231, control for generating a current in accordance with the current command code is executed with respect to the power supply circuit 232. The power supply circuit 232 is an AC/DC conversion-type power supply circuit in which the current is variable, and generates a current in accordance with the excitation current value that is specified by the current command code. The generated excitation current is supplied to the stator coils of the stepping motor 330.

A command value (position command code) representing the next extension and retraction distance is supplied from the control device 100 to the control section 231. The term "next extension and retraction distance" refers to an extension and retraction distance after a predetermined control period Δt (for example, 10 ms). Note that the extension and retraction distance represents a distance from a position when the arm section 2 is in a most retracted state. Note that, in the case of the control section of the driver units of the joints J1, J2, J4, J5 and J6, a joint angle is given as a command value. The term "joint angle" refers to a positive or negative rotation angle from a reference position (origin). The extension and retraction distance and joint angle are referred to generically as "joint variables".

The control section 231 outputs a pulse control signal in accordance with the position command code to the pulse signal generating section 233. Specifically, the control section 231 determines the number of pulses by dividing by the step length a rotation angle of the drive gear 50 that is required for realizing a change in position by the amount of a difference in distance between the present extension and retraction distance and the extension and retraction distance after the predetermined control period Δt that is input from the control device 100, and determines the pulse frequency by dividing the control period Δt by the number of pulses and calculating the reciprocal of the resulting value. The control section 231 outputs a pulse control signal corresponding to the determined pulse conditions (number of pulses and pulse frequency) to the pulse signal generating section 233.

The pulse signal generating section 233 supplies pulses of a number that is specified by the pulse control signal that is output from the control section 231 to switching elements between the stator coils and the power supply circuit 232 while sequentially switching the pulse frequency. Thereby, in the period Δt, the stepping motor 330 rotates the drive gear 50 by the amount of a rotation angle required to achieve a change in position corresponding to the aforementioned difference in distance, and in this way the arm section 2 extends or retracts as far as the instructed extension and retraction distance. Similarly, a position command code representing the next joint angle is input from the control device 100 to the respective driver units 210, 220, 240, 250 and 260 corresponding to the joints J1, J2, J4, J5 and J6, and thereby the respective joints J1, J2, J4, J5 and J6 are rotated as far as the instructed joint angle.

The control section 231 receives the input of an operation stop signal for stopping the joint J3 at the current position thereof from the control device 100. The stepping motor 330 continuously supplies current to the stator coil of the phase corresponding to the current position to thereby stop the joint J3 at that position. For this purpose, for example, a code representing the present extension and retraction distance (joint variable) of the joint J3 is applied as an operation stop signal to the control section 231. Similarly, operation stop signals including codes representing the current joint angles are input to each of the driver units 210, 220, 240, 250 and 260 corresponding to the joints J1, J2, J4, J5 and J6 from the control device 100. As a result, operation of the robot arm mechanism stops.

The drive shaft encoder 235 outputs a pulse each time the drive shaft rotates by a certain rotation angle (resolution, encoder step angle). In practice, two kinds of pulses which are an A-phase pulse and a B-phase pulse for distinguishing between the forward/reverse rotation directions are output. The drive shaft encoder 235 outputs an origin pulse signal (Z-phase signal) to the counter 237 each time the drive shaft completes one rotation. In accordance with the rotation direction, the counter 237 adds or subtracts the A-phase (or B-phase) pulse that is output from the drive shaft encoder 235. The counter 237 resets the count value when a Z-phase pulse is output from the drive shaft encoder 235. Accordingly, the encoder pulse count value represents the rotational displacement (rotation angle) of the drive shaft from the origin. The counter 237 also counts the Z-phase pulses that are output from the drive shaft encoder 235. The count value of the Z-phase pulse represents the "number of rotations". Hereunder, when only the term "count values" is used, this term refers generically to a count value representing the rotation angle and a count value representing the number of rotations, and in the case of distinguishing between the aforementioned two count values, the two count values are referred to as "count value representing the rotation angle" and "count value representing the number of rotations", respectively. The count values are output from the counter 237 at intervals of each fixed period ΔT. The period ΔT may be the same as the aforementioned control period Δt or may differ therefrom. Data for the count values relating to rotation of the drive shaft that are output from the counter 237 is taken in by the control device 100 through a driver unit interface 107 in accordance with control of a system control section 101 of the control device 100.

The output shaft encoder 236 is similar to the drive shaft encoder 235, and outputs pulse signals (A phase/B phase) to the counter 238 each time the rotary shaft (drive gear shaft, output shaft) of the drive gear 331 rotates by a certain rotation angle, and outputs an origin pulse signal (Z-phase signal) to the counter 238 each time the drive gear shaft completes one rotation. The counter 238 counts the A-phase pulses (or B-phase pulses) and the Z-phase pulses that were output from the output shaft encoder 236. The counter 238 outputs a count value representing the number of rotations of the drive gear shaft together with a count value representing the number of rotations of the drive gear shaft at intervals of the fixed period ΔT.

The control device 100 has the system control section 101, an operation section interface 102, a storage section 103, a computational processing section 104, a collision determining section 105, a display control section 106, the driver unit interface 107 and an outputting section 108. In accordance with control by the system control section 101, data relating to the count value representing the rotation angle of the drive shaft and the count value representing the number of rotations of the drive shaft, as well as data relating to the count value representing the rotation angle of the drive gear shaft and the count value representing the number of rotations of the drive gear shaft is supplied from the respective driver units 210 to 260 to the control device 100 at intervals of the predetermined control period ΔT (for example, every 10 ms) through the driver unit interface 107.

An operation section 60 is connected through the operation section interface 102 to the control device 100. The operation section 60 functions as an input interface for allowing the operator to perform input operations to change the position of the attention point or to change the posture of the wrist section 4 or robot hand (end effector) and to also change a time. For example, the operation section 60 is equipped with a joy stick or the like for specifying a final target position to which to move the robot hand and a movement time. For example, the final target position and the movement time of the robot hand are input based on a direction in which the joy stick is operated, an angle at which the joy stick is tilted, and the operational acceleration of the joy stick. Further, the operation section 60 is equipped with an operation stop button for stopping operation of the robot arm mechanism. Note that, the input devices constituting the operation section 60 can be replaced with other devices, for example, a mouse, a keyboard, a trackball, and a touch panel. For example, a touch panel or the like is typically adopted for the operation section 60 that is configured as a pendent at a time of direct teaching.

The system control section 101 has a CPU (Central Processing Unit) and a semiconductor memory or the like, and performs overall control of the control device 100. Each section is connected via a control/data bus 120 to the system control section 101.

Upon converting the rotation angle and the number of rotations of the drive shaft (input shaft) in accordance with the speed reduction ratio α, if a difference (rotational deviation, angular difference) has arisen with respect to the rotation angle and number of rotations of the shaft (output shaft) of the drive gear 331, there is a risk that a disturbance such as a collision occurs. However, there are also cases where the difference is due to looseness in the transmission mechanism such as caused by belt expansion and contraction or backlash, and in order to exclude such cases, in this case a threshold value is set with respect to the aforementioned "rotational deviation", and when the aforementioned "rotational deviation" exceeds the threshold value it is determined that the deviation is caused by a disturbance such as a collision. The storage section 103 stores data of the threshold value θth. Similarly, the storage section 103 stores data of threshold values for determining whether or not the cause of rotational deviations corresponding to the respective joints J1, J2, J4, J5 and J6 is a disturbance such as a collision, to thereby exclude cases where rotational deviations are caused by looseness in the transmission mechanism. The threshold values are set in accordance with the looseness of the respective transmission mechanisms, and it is also possible to arbitrarily change the threshold values in accordance with an operator instruction through the operation section 60. Further, the storage section 103 stores data for a notification image that has a message for notifying the operator that an interfering object collided with the robot device.

The computational processing section 104 calculates a joint variable vector after the elapse of the control period Δt, that is applied as a command value with respect to each of the driver units 210 to 260. Note that, the term "joint variable vector" refers to six joint variables for the joints J1 to J6, that is, six variables which are the joint angles of the rotary joints J1, J2, and J4 to J6 and the linear displacement of the linear extension and retraction joint J3.

First, in order to calculate a joint variable vector after the control period Δt elapses, the computational processing section 104 calculates the current position and posture of the end attention point. Specifically, the computational processing section 104 calculates a cumulative count value from the origin of the encoder by means of the rotation angles and numbers of rotations of the drive shaft that were counted by the respective counters of the driver units 210 to 260, and calculates the current joint variable of each of the joints J1 to J6 by multiplying the cumulative count value by a step angle that corresponds to a count of 1. The computational processing section 104 calculates the current position and posture of the end attention point as seen from the robot coordinate system Σb by substituting the current joint variable of each of the joints J1 to J6 as parameters into a homogeneous transformation matrix K. The homogeneous transformation matrix K is a determinant that defines the relation between the end coordinate system Σh and the robot coordinate system Σb. The homogeneous transformation matrix K is determined by the relation between links (link lengths and torsional angles of links) constituting the robot arm mechanism and the relation between the axes of the joints (distances between links and angles between links). The computational processing section 104 repeatedly performs the above described calculation processing at intervals of the control period Δt, to thereby calculate the current position and posture of the end attention point for each control period Δt.

Next, based on the calculated current joint variables for each of the joints J1 to J6 and the final target position and posture of the end that is input by the operator through the operation section 50, the computational processing section 104 calculates a sequence of points as target positions of the end attention point for the respective unit times Δt (control period, for example 10 ms) that are connected to each other in the relevant interval. Specifically, the computational processing section 104 calculates the trajectory of the end attention point (hereunder, referred to as "end trajectory") by substituting the current position and posture of the end attention point and the final target position and posture of the end attention point as parameters into a trajectory calculation formula for the end attention point that is a preset formula, and calculates a sequence of points as target positions for each unit time Δt on the end trajectory that is calculated. An arbitrary method is adopted as the trajectory calculation method.

Finally, the computational processing section 104 calculates a plurality of joint variable vectors that correspond to the calculated plurality of target positions, respectively. Specifically, based on the current position and posture of the end attention point, the next target position and posture after the control period Δt elapses, and the control period Δt, the computational processing section 104 calculates the end velocity, and converts the calculated end velocity to a joint angular velocity using a Jacobian inverse matrix. The Jacobian inverse matrix is given by partial derivatives generated by joint variables of a vector representing the position of the end attention point and the end posture, and is a matrix that converts an end velocity (minute changes in the end position and posture) to a joint angular velocity (minute changes in the joint angle and extension and retraction length). The Jacobian inverse matrix is calculated by means of the current joint variable vector and the link parameters of the arm structure. The computational processing section 104 calculates the displacement amounts of the respective joints J during the unit time Δt by multiplying the joint angular velocity by the unit time Δt, and calculates the joint variable vector for after the unit time Δt elapses by adding the calculated displacement amounts of the respective joints J to the (current) joint variable vector for the time immediately prior to movement.

In accordance with control by the system control section 101, the outputting section 108 outputs a command value (joint variable) for each of the joints J1 to J6 which is calculated by the computational processing section 104 to the driver units 210 to 260, respectively. Further, in accordance with control by the system control section 101, the outputting section 108 outputs an operation stop signal to the driver units 210 to 260, respectively.

Based on the output of the drive shaft encoder 235 and the output of the output shaft encoder 236, in practice based on the count values of the counters 237 and 238, the collision determining section 105 determines whether or not an operational abnormality occurs that is caused by a disturbance factor such as an interfering object colliding with a robot arm section 2. Here, an example in which a collision with an interfering object is taken as an operational abnormality will be described. When the collision determining section 105 has determined that "an interfering object collided with the robot device", the collision determining section 105 outputs a collision determination signal. The details of the collision determining section 105 are described later.

When a collision determination signal is output from the collision determining section 105, the system control section 101 reads the notification image from the storage section 103, and writes the notification image in a frame memory of the display control section 106. The display control section 106 reads the data of the image that is stored in the frame memory, and displays the image on a display section 70. Typical examples of the display section 70 include a CRT display, a liquid crystal display, an organic EL display and a plasma display.

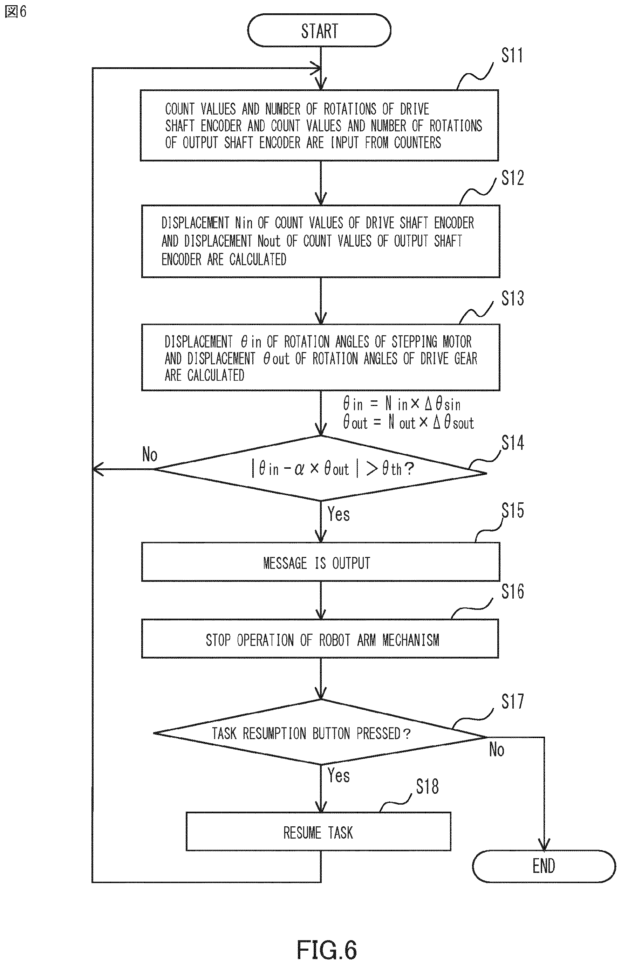

### (Collision Determination Processing) FIG. 6

The robot device according to the present embodiment has a collision determination function for determining whether or not an interfering object collided with the robot device. The processing relating to the collision determination function is referred to as "collision determination processing". The collision determination processing is repeatedly performed by the collision determining section 105 at intervals of a collision determination period (for example, is equivalent to the control period (10ms)). FIG. 6 is a flowchart illustrating procedures of the collision determination processing by the collision determining section 105 shown in FIG. 5. Here, collision determination processing with respect to the joint J3 will be described. Note that, the collision determining section 105 can perform collision determination processing for the each of other joints J1, J2, J4, J5 and J6 by similar procedures as the procedures shown in FIG. 6.

### (Step S11)

In accordance with control by the system control section 101, count values representing the rotation angle and number of rotations of the drive shaft (input shaft) of the stepping motor 330 are taken in by the control device 100 from the counter 237. Similarly, in accordance with control by the system control section 101, count values representing the rotation angle and number of rotations of the drive gear shaft (output shaft) of the drive gear 331 are supplied to the control device 100 repeatedly at intervals of a certain period ΔT from the counter 238.

### (Step S12)

Based on the count values relating to rotation of the drive shaft that were input in step S11, cumulative count values relating to rotation of the drive shaft are sequentially calculated and stored by the collision determining section 105. A difference (displacement) Nin between the current cumulative count value and a count value with respect to the cumulative count value for the immediately preceding period (ΔT) is calculated by the collision determining section 105.

Similarly, based on the count values relating to rotation of the drive gear shaft, a cumulative count value relating to rotation of the drive gear shaft is sequentially calculated and stored by the collision determining section 105. A difference (displacement) Nout between the current cumulative count value and the cumulative count value for the immediately preceding period is calculated by the collision determining section 105.

### (Step S13)

By multiplying the displacement Nin for the count values relating to rotation of the drive shaft which is calculated in step S12 by a resolution (step angle) Δθin of the drive shaft encoder 235, a rotation angle displacement θin of the stepping motor 330 during one period ΔT is calculated. Similarly, by multiplying the displacement Nout for the count values relating to rotation of the drive gear shaft which is calculated in step S12 by a resolution (step angle) Δθout of the output shaft encoder 236, a rotation angle displacement θout of the drive gear 331 during one period is calculated.

### (Step S14)

Calculation is performed for a difference in angle between the displacement θin of the rotation angle of the stepping motor 330 during one period ΔT that is calculated in step S13 and an angle value corresponding to the displacement θin, converted with the speed reduction ratio α from the displacement θout of the rotation angle of the drive gear 331 during one period ΔT that is calculated in step S13, that is, an angle value obtained by multiplying the displacement θout by the reciprocal of the speed reduction ratio α; in other words, the "rotational deviation" between the input shaft and the output shaft is calculated. When an absolute value of the calculated angular difference is equal to or less than the preset threshold value θth for excluding rotational deviations due to looseness such as caused by belt expansion and contraction or backlash in the transmission mechanism ("No" in step S14), the collision determining section 105 determines that "an interfering object has not collided with the robot device", and the processing returns to step S11. On the other hand, when the absolute value of the calculated angular difference is greater than the threshold value θth ("Yes" in step S14), the collision determining section 105 determines that "an interfering object collided with the robot device", and outputs the collision determination signal.

Note that, although in the foregoing description a rotational deviation between the input and output shafts of a drive shaft and a drive gear shaft is utilized for determining a collision, the description is based on the premise of a rotation angle that is in accordance with a command value that instructs rotation at the stepping motor being essentially equivalent to the actual rotation angle of the drive shaft. Accordingly, the collision determination processing may be processing that makes a determination regarding an operational abnormality such as a collision by comparing a rotation angle that is instructed by the command value and a rotation angle that is determined based on the count value for pulses of the output shaft encoder 238 that is engaged with the shaft of the drive gear as a driven member as seen from the stepping motor 330.

### (Step S15)

Upon a collision determination signal being output by the collision determining section 105 in step S14, the system control section 101 reads data for a notification image that notifies an operator that an interfering object collided with the robot device from the storage section 103, and writes the data in the frame memory of the display control section 106.

The display control section 106 reads the data for the notification image that is stored in the frame memory, and displays the notification image on the display section 70. Thereby, a message notifying that an interfering object collided with the robot device is displayed on the display section 70.

### (Step S16)

Upon the collision determination signal being output by the collision determining section 105 in step S14, along with the aforementioned message output, the system control section 101 stops the outputting of command values from the outputting section 108 to thereby cause the operations of the robot arm mechanism to stop (emergency stop), and interrupts the work being given to the robot device and resets the task schedule itself.

Note that, when the collision determining section 105 determines that a collision occurs at least at one of the joints J1 to J6, the collision determining section 105 outputs the collision determination signal. In other words, the collision determining section 105 applies the comparison outputs (Yes flag "1", No flag "0") of step S14 for the six systems with respect to the joints J1 to J6 to an OR circuit, and when a rotational deviation for even one of the six joints J1 to J6 exceeds the threshold value and the flag "1" is set, the collision determining section 105 outputs the flag "1", and outputs the collision determination signal in accordance therewith.

That is, in the present embodiment, irrespective of from which direction or at which place a worker or the like contacted or collided with the arm section 2 or hand section, a collision determination is made without fail for at least one of the joints J1 to J6.

### (Steps S17 and S18)

Because the task time management is disrupted by the occurrence of a collision, and it is also necessary for task operation to be performed, for example, in cooperation with external devices such as a conveyor device of a line, it is not limited to not only resume operation of the arm, but to also resume the task operation itself. Further, it is also necessary to eliminate the cause of the collision. Accordingly, after stopping operations in step S16, the system control section 101 waits for an instruction from the operator to resume the task, and resumes the task upon receiving the instruction.

For example, when no instruction to resume the task has been given by the operator even after a fixed time period elapses from the time point at which operation is stopped in step S16, the system control section 101 ends the arm operation.

### (Effects)

According to the collision determination processing for the joint J3 described in the foregoing, collision of an interfering object with a portion that is further towards the tip than the joint J3 of the robot device in a manner such that an external torque arises that has a component that is parallel to the third movement axis RA3 of the joint J3 can be detected. The collision determination processing is performed by determining whether or not a predetermined angular difference arises between the rotation angle of the drive shaft encoder 235 and the rotation angle of the output shaft encoder 236 that are provided in the joint J3. This determination utilizes the fact that when external torque that is caused by a collision with an interfering object arises in a direction in which the arm section 2 of the joint J3 expands and retracts (a direction parallel to the third movement axis), an angular difference arises between the rotation angle of the stepping motor 330 and the actual rotation angle of the drive gear 331 (joint J). However, because the transmission mechanism between the stepping motor 330 and the drive gear 331 undergoes elastic deformation and the like, in some cases an angular difference arises between the rotation angle of the stepping motor 330 and the actual rotation angle of the drive gear 331 due to a reason which is not a collision, such as inertia acting on the joint at the start of operation or when operation stops. By setting a threshold value for the angular difference in order to exclude such cases from the collision determination, it can be determined that "an interfering object collided with the robot device" only when the angular difference exceeds the threshold value.

Note that, the collision determination processing for the joint J3 cannot detect that an interfering object collided with a portion that is further towards the tip than the joint J3 of the robot device in a manner such that an external torque arises that has a component which is parallel to the third movement axis RA3 of the joint J3. However, by performing similar collision determination processing as the processing for the joint J3 with respect to the other joints J1, J2, J4, J5 and J6 also, collision of an interfering object with the robot arm mechanism can be detected more comprehensively. For example, according to the collision determination processing for the joint J1, collision of an interfering object with a portion that is further towards the tip than the joint J1 of the robot device in a manner such that an external torque arises that has a component which is orthogonal to the first rotation axis RA1 of the joint J1 can be detected. Further, according to the collision determination processing for the joint J2, collision of an interfering object with a portion that is further towards the tip than the joint J2 of the robot device in a manner such that an external torque arises that has a component which is orthogonal to the second rotation axis RA2 of the joint J2 can be detected. According to the robot device of the present embodiment that is described above, contact of an interfering object against the robot arm mechanism can be comprehensively detected by the collision determination processing with respect to each of the joints J1 to J6 of the robot arm mechanism. That is, in the present embodiment, irrespective of from which direction or at which place a worker or the like contacted or collided with the arm section 2 or hand section, a collision determination is made without fail for at least one of the joints J1 to J6.

Although in the aforementioned description, the determination of an operational abnormality such as a collision is performed by the collision determining section 105 of the control device 100 that is an external device as seen from the driver unit 230 of the stepping motor 330, a configuration may also be adopted in which the outputs of the counters 237 and 238 are compared at the control section 231 (motor control device) of the driver unit 230 of the stepping motor 330 to perform a collision determination, or in which a command value from the external control device 100 and a count value of the counter 238 of the output shaft encoder 236 are compared to perform a collision determination.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

### REFERENCE SIGNS LIST

41... display section, 60... operation section, 100... control device, 101... system control section, 102... operation section I/F, 103... storage section, 104... computational processing section, 105... collision determining section, 106... display control section, 107... driver unit I/F, 108... output section, 120... control/data bus, 210 to 260... driver unit, 231... control section, 232... power supply circuit, 233... pulse signal generating section, 235... drive shaft encoder, 235... output shaft encoder, 236, 237... counter, 310 to 360... stepping motor

## Claims

1. A robot device that includes an articulated arm mechanism, **characterized in that** the robot device comprises:
a plurality of links,
a plurality of joints interconnecting the plurality of links;
a plurality of motors that generate motive power for driving the plurality of joints;
a transmission mechanism that transmits rotation of a drive shaft of a motor of at least one joint among the joints to a rotary shaft of the at least one joint;
a first encoder that detects rotation of the drive shaft of the motor of the at least one joint;
a second encoder that detects rotation of the rotary shaft of the at least one joint; and
a determining section that determines an operational abnormality based on an encoder pulse that is output from the first encoder and an encoder pulse that is output from the second encoder.

2. The robot device according to claim 1, **characterized in that**:
the determining section determines that the operational abnormality exists when an angular difference which is converted in accordance with a speed reduction ratio of the transmission mechanism of a rotation angle obtained by multiplying a number of encoder pulses that are output from the second encoder by a step angle of the second encoder with respect to a rotation angle obtained by multiplying a number of encoder pulses that are output from the first encoder by a step angle of the first encoder exceeds a predetermined threshold value.

3. The robot device according to claim 1, **characterized in that**:
the determining section makes the determination with respect to the operational abnormality based on a number of encoder pulses that are output from the first encoder and a number of encoder pulses that are output from the second encoder.

4. The robot device according to claim 1, **characterized in that** the robot device further comprises:
an outputting section that outputs a warning by means of a display, a sound, or both a display and a sound when existence of the operational abnormality is determined by the determining section.

5. The robot device according to claim 1, **characterized in that** the robot device further comprises:
a control section that stops driving of the plurality of motors when existence of the operational abnormality is determined by the determining section.

6. An arm mechanism **characterized in that** the arm mechanism comprises:
a joint interconnecting links;
a motor that generates motive power for driving the joint;
a transmission mechanism that transmits rotation of a drive shaft of the motor to a rotary shaft of the joint that is connected to the links;
a first encoder that detects rotation of the drive shaft of the motor;
a second encoder that detects rotation of the rotary shaft of the joint; and
a determining section determines an operational abnormality based on an encoder pulse that is output from the first encoder and an encoder pulse that is output from the second encoder.

7. A motor control device that controls a motor that generates motive power for driving a driven member, **characterized in that** the motor control device comprises:
a first encoder that detects rotation of a drive shaft of the motor;
a second encoder that detects rotation of the section to be driven; and
a determining section that determines an operational abnormality based on an encoder pulse that is output from the first encoder and an encoder pulse that is output from the second encoder.

8. A motor control device that controls a motor that generates motive power for driving a driven member, **characterized in that** the motor control device comprises:
a driving section that drives the motor in accordance with a command value;
an encoder that detects rotation of the section to be driven; and
a determining section that determines an operational abnormality based on the command value and an encoder pulse that is output from the encoder.
